# EUROPÄISCHE PATENTSCHRIFT

(11) **EP 0 851 824 B1**
(45) Veröffentlichungstag und Bekanntmachung des Hinweises auf die Patenterteilung: **19.01.2000**
(21) Anmeldenummer: 96934650.1
(22) Anmeldetag: 11.10.1996
(51) Int. Cl.: B62D 53/08

(54) **ZUGSATTELZAPFEN FÜR SATTELANHÄNGER UND BEFESTIGUNGSANORDNUNG**
SEMITRAILER FIFTH WHEEL COUPLING PIN FOR SEMITRAILER AND ATTACHMENT ARRANGEMENT
PIVOT D'ACCOUPLEMENT DE SEMI-REMORQUE ET DISPOSITIF DE FIXATION

(30) Priorität: 14.10.1995 DE 19538307
(43) Veröffentlichungstag der Anmeldung: 08.07.1998
(73) Patentinhaber: IT-Consulting AG, 6330 Cham (CH)
(72) Erfinder: Schulz, Gerd, 34289 Zierenberg (CH)
(74) Vertreter: Vonnemann, Gerhard, Dr.-Ing.
(86) Internationale Anmeldenummer: EP9604437
(87) Internationale Veröffentlichungsnummer: WO9714605

(56) Entgegenhaltungen:
- CH-A- 370 323
- DE-A- 1 680 256
- US-A- 3 807 765

## Beschreibung

Die Erfindung betrifft einen Zugsattelzapfen für Sattelanhänger nach dem Oberbegriff des Anspruchs 1, zur Verbindung des Sattelanhängers mit der Sattelkupplung einer Sattelzugmaschine, mit einem Kupplungsabschnitt zum Einrasten in die Sattelkupplung, mit einem Stützabschnitt zum Einstecken in eine Abstützflächen aufweisende Aufnahmeöffnung des Sattelanhängers und mit einem Sicherungsabschnitt für die Sicherung des Zugsattelzapfens gegen axiales Herausfallen aus der Aufnahmeöffnung. Die Erfindung betrifft weiter eine Befestigungsanordnung zum Befestigen von Zugsattelzapfen an Sattelanhängern nach dem Oberbegriff des Anspruchs 4 mit einem am Sattelanhänger befestigten, vorzugsweise verschweißten Gehäuse, das eine durchgehende, vorzugsweise konische Aufnahmeöffnung für die Aufnahme eines Stützabschnitts des Zugsattelzapfens besitzt, wobei ein Sicherungsabschnitt des Zugsattelzapfens aus der dem Sattelanhänger zugewandten Innnenseite des Gehäuses herausragt. Ein gattungsgemäßer Zugsattelzapfen, bzw. eine gattungsgemäße Befestigungsanordnung sind aus der US-A- 3 807 765 bekannt. Zur Verbindung einer Sattelzugmaschine mit einem Sattelauflieger oder Sattelanhänger dient eine Kupplungsanordnung, bestehend aus einer an der Zugmaschine montierten Kupplungsplatte mit Einführungschlitz und Sicherung und einem sogenannten Zugsattelzapfen oder Königszapfen, der am Sattelanhänger befestigt ist. Um weitmöglichste Kompatibilität zwischen Sattelzugmaschinen und Sattelanhängern zu erreichen sind die Abmessungen des Einführungsschlitzes und des Zapfenkörpers genormt, beispielsweise in der Norm DIN 47080 oder in der Norm ISO 337.

Bei bekannten Ausführungen besteht der Zugsattelzapfen aus einem genormten Kupplungsabschnitt, einem konischen Stützabschnitt und einem als Gewinde ausgeführten Sicherungsabschnitt. Bekannte Befestigungsanordnungen besitzen ein Gehäuse, das an dem Sattelanhänger festgeschweißt ist und eine konische Bohrung aufweist, in die der Zugsattelzapfen von unten eingesteckt wird. Dabei liegt der konische Stützabschnitt des Zugsattelzapfens an der komplementär geformten konischen Öffnung an, um im wesentlichen radial gerichtete Zugkräfte der Zugmaschine bzw. Drehmomente und im wesentlichen axial gerichtete Gewichtskräfte des Sattelanhängers zu übertragen. Zur Sicherung des Zugsattelzapfens gegen axiales Herausfallen wird auf das Gewinde des aus der Öffnung nach oben in den Innenraum des Sattelanhängers ragenden Sicherungsabschnitts eine Kronenmutter aufgeschraubt, die ihrerseits mittels eines Splintes gegenüber dem Zapfenkörper gesichert wird.

Zugsattelzapfen unterliegen durch den Fahrbetrieb einem gewissen Verschleiß, so daß sie von Zeit zu Zeit ausgewechselt werden müssen. Bei der bekannten Ausführung müssen hierzu die Splintsicherung und die Kronenmutter abgenommen werden, worauf der verschlissene Zugsattelzapfen aus dem Sockel herausgenommen und ersetzt werden kann. Dabei ist an der bekannten Ausführung nachteilig, daß die Kronenmutter nur von der Innenseite des Sattelanhängers lösbar ist und daß zusätzlich die Splintsicherung aus- und eingebaut werden muß. Auf die Splintsicherung kann aber deshalb nicht verzichtet werden, weil sich eine ungesicherte Kronenmutter infolge geringfügiger Bewegungen eines verschlissenen Zugsattelzapfens infolge des Fahrbetriebs lösen könnte.

Aufgabe der Erfindung ist es, einen Zugsattelzapfen und eine Befestigungsanordnung anzugeben, die eine einfache Montage und eine sichere Befestigung des Zugsattelzapfens gewährleistet.

Diese Aufgabe wird durch einen Zugsattelzapfen nach Anspruch 1 gelöst. Der erfindungsgemäße Zugsattelzapfen kann auf einfache und sichere Weise durch eine erfindungsgemäße Befestigungsanordnung gemäß Anspruch 4 am Sattelanhänger befestigt werden, indem auf der Innenseite des Gehäuses der Befestigungsanordnung ein Klemmkörper aufgeschraubt ist, der mit einer sich zum Ende des Zugsattelzapfens hin verengenden Klemmöffnung den Sicherungsabschnitt umschließt, wobei zwischen einer Innenwand der Klemmöffnung und einer seitlichen Ausnehmung des Sicherungsabschnitts zumindest ein Sicherungskörper eingeklemmt ist.

Bei der erfindungsgemäßen Anordnung kann sich der Zugsattelzapfen nicht mehr aus dem Gehäuse herausschrauben, weil er nicht durch eine Kronenmutter, sondern durch einen eingeklemmten Sicherungskörper am Herausfallen gehindert wird. Zwar wird bei der erfindungsgemäßen Anordnung der Klemmkörper festgeschraubt, jedoch können die hierfür verwendeten Schrauben nicht durch Drehen des Zugsattelzapfens gelöst werden. Neben der direkten radialen und axialen Abstützung in der Aufnahmeöffnung des Gehäuses stützt sich der erfindungsgemäße Zugsattelzapfen in radialer Richtung auch über die Sicherungskörper und den Klemmkörper am Gehäuse ab. Dabei werden aber die Befestigungsschrauben mit den Abstützkräften nicht belastet. Schon deshalb werden sich die Befestigungsschrauben im Fahrbetrieb nicht von selbst lösen.

In einer vorteilhaften Ausführungsform ist der Zugsattelzapfen im wesentlichen rotationssymmetrisch ausgebildet und besitzt einen konisch geformten Stützabschnitt. Aufgrund der konischen Form des Sützabschnitt können die aneinander anliegenden konischen Abstützflächen des Stützabschnitts und der Aufnahmeöffnung sowohl die von der Sattelzugmaschine aufgebrachten radialen Zugkräfte oder Drehmomente als auch die axial gerichteten Gewichtskräfte des Sattelanhängers abstützen. Außerdem gewährleistet diese Anordnung einen besonders festen Sitz des Zugsattelzapfens in der Aufnahmeöffnung.

In einer einfachen Ausführungsform ist als seitliche Ausnehmung eine umlaufende Ringnut vorgesehen. Eine derartige Ringnut ist bei der Fertigung des Zugsattelzapfens auf besonders einfache Weise herstellbar. Außerdem ermöglicht die Anordnung einer Ringnut eine besonders platzsparende Ausführungsform des Sicherungsabschnitts, der in axialer Richtung sehr viel kürzer sein kann, als wenn er eine große Kronenmutter tragen müßte. Ein erfindungsgemäßer Zugsattelzapfen ist also mit Vorteil besonders kurz bauend ausgeführt, so daß er weniger weit in den Innenraum des Sattelanhängers ragt.

Durch die Maßnahme, daß die Nutwände von zwei konischen Abschnitten gebildet werden, so daß die Ringnut die Form einer Einschnürung hat, wird ein einfaches Einklemmen eines Sicherungskörpers in radialer Richtung in die Ringnut gewährleistet, wobei der Sicherungskörper klapperfrei angeordnet ist.

Die Erfindung kann noch verbessert werden durch die Maßnahme, daß auf der Stirnseite des Sicherungsabschnitts eine nicht rotationssymmetrische Ausnehmung für den Eingriff einer Verdrehsicherung vorgesehen ist. Durch die Verdrehsicherung können schädliche Drehbewegungen des Zugsattelzapfens aufgrund des Fahrbetriebs vermieden werden.

In einer bevorzugten Ausführungsform einer erfindungsgemäßen Befestigungsanordnung ist die Innenwand der Klemmöffnung des Klemmkörpers konisch geformt. Durch die konische Innenwand wird beim axialen Aufschrauben des Klemmkörpers auf das Gehäuse der Befestigungsanordnung ein an der Innenwand anliegender Sicherungskörper radial nach innen gedrückt, um schließlich zwischen der Innenwand und dem Sicherungsabschnitt des Zugsattelzapfens eingeklemmt zu werden. Die konische Innenwand wirkt dabei als Rampe, die die axiale Bewegung des Klemmkörpers unter Kraftverstärkung in eine radiale Bewegung des Sicherungskörpers umsetzt.

In einer bevorzugten Ausführungsform der Erfindung ist der Klemmkörper deckelförmig ausgestaltet. Dadurch erhält er eine besonders gute mechanische Stabilität und kann gleichzeitig den Innenraum des Gehäuses und den Sicherungsabschnitt des Zugsattelzapfens vor Verschmutzung schützen.

Der deckelförmige Klemmkörper kann dadurch noch verbessert werden, daß in seiner Mitte ein axial in Richtung Zugsattelzapfen vorstehender, nicht rotationssymmetrischer Vorsprung angeordnet ist, der als Verdrehsicherung in eine komplementär geformte Ausnehmung auf der Stirnseite des Sicherungsabschnitts eingreift.

In einer besonders vorteilhaften Ausführungsform der Befestigungsanordnung ist vorgesehen, daß der Klemmkörper mit seitlichen, im wesentlichen achsparallel zum Zugsattelzapfen angeordneten Gewindebohrungen versehen ist, in die von der Außenseite des Gehäuses her eingesteckte und durch Bohrungen des Gehäuses hindurchgehende Gewindebolzen eingeschraubt sind. Diese Ausführungsform erlaubt eine besonders einfache Demontage und Montage beim Auswechseln des Zugsattelzapfens.

Die derart angeordneten Gewindebolzen können nämlich auf einfache Weise von außerhalb des Sattelanhängers gelöst werden, wobei der Klemmkörper axial nach oben verschoben wird. Dabei kommen der oder die Sicherungskörper außer Eingriff mit dem Sicherungsabschnitt, so daß der verschlissenen Zugsattelzapfen einfach nach unten aus der Aufnahmeöffnung des Gehäuses herausgezogen werden kann. Ein neuer Zugsattelzapfen kann auf ebenso einfache Weise von unten in die Aufnähmeöffnung eingesteckt und durch Festziehen der Gewindebolzen wieder befestigt werden.

Die Befestigungsanordnung wird noch verbessert durch die Maßnahme, daß die Bohrungen des Gehäuses als Stufenbohrungen ausgeführt sind und daß die Köpfe der Gewindebolzen in die Stufenbohrungen versenkt angeordnet sind. Derartig versenkt angeordnete Gewindebolzen ragen nicht nach unten aus dem Sattelanhänger heraus, so daß sie im Fahrbetrieb einerseits nicht stören und andererseits nicht beschädigt werden können.

Gemäß einer vorteilhaften Ausgestaltungsform ist vorgesehen, daß der Sicherungskörper im wesentlichen als geschlitzte Hülse ausgeführt ist, die den Sicherungsabschnitt des Zugsattelzapfens umschließt und mit ihrer Unterseite auf der Oberseite des Gehäuses aufliegt, und daß die Oberseite der Hülse beim Festschrauben des Klemmkörpers durch dessen konische Innenwand in eine umlaufende Ringnut des Sicherungsabschnitts gedruckt wird, wobei die Hülse insgesamt eine konische Form einnimmt. Aufgrund der Hülsenform kann der Sicherungskörper den Zugsattelzapfen umschließen und so von allen Seiten gleichmäßig festklemmen. Dabei wird durch die Schlitze eine elastische Verformbarkeit der Hülse gewährleistet, die einerseits den Eingriff in die umlaufende Ringnut des Sicherungsabschnitts ermöglicht, und andererseits beim Lösen des Klemmkörpers den Sicherungskörper wieder außer Eingriff mit dem Sicherungsabschnitt bringt.

Ein besonders guter Klemmeingriff in die Ringnut erhält man durch die Maßnahme, daß die Innenwand der Hülse im Bereich der Oberseite der Hülse konisch erweitert ist, so daß das Profil der Hülse an das Profil der Ringnut angepaßt ist.

In einer bevorzugten Ausführungsform ist vorgesehen, daß die Hülse mehrere von der Oberseite her eingebrachte, nicht durchgehende Schlitze aufweist, die im wesentlichen in gleichen Winkelabständen über den Umfang verteilt angeordnet sind. Die gleichmäßige Anordnung mehrerer Schlitze gewährleistet eine gleichmäßige Verformbarkeit der Hülse in die konische Form beim Festschrauben des Klemmkörpers. Beim Lösen des Klemmkörpers wird sich außerdem der Sicherungskörper aufgrund der gleichmäßig verteilten Schlitze wieder weitgehend in seine rotationssymmetrische Grundform zurückverformen.

Einen leichter verformbaren und "weicheren" Sicherungskörper erhält man durch die Maßnahme, daß weitere nicht durchgehende Schlitze von der Unterseite her in die Hülse eingebracht sind. Dabei kann sich auch der Durchmesser der Unterseite an die Abmessungen des Zugsattelzapfens und des Klemmkörpers anpassen.

Die Anpassung des Durchmessers kann aber auch dadurch erleichtert werden, daß ein durchgehender Schlitz vorgesehen ist, der die Hülse auftrennt.

In einer Weiterbildung der Erfindung sind die Schlitze radial nach innen zu verbreitert. Dadurch kann sich die Hülse an ihrer Oberseite besonders gut dem kleineren Durchmesser der Ringnut im Sicherungsabschnitt des Zugsattelzapfens anpassen.

In einer besonders einfach zu fertigenden Ausführungsform ist vorgesehen, daß die Schlitze von der Ober- oder Unterseite des Hülse ausgehend parallel zur Mittelachse der Hülse verlaufen.

Für eine besonders gute Verformbarkeit der Hülse zur Anpassung an die Nut im Sicherungsabschnitt des Zugsattelzapfens wird empfohlen, daß die Schlitze von der Ober- oder Unterseite der Hülse ausgehend schräg zur Mittelachse der Hülse geneigt verlaufen.

Die letztgenannte Ausführungsform kann noch dadurch verbessert werden, daß die Schlitze abwechselnd in verschiedene Richtungen geneigt angeordnet sind.

Selbstverständlich fallen nicht nur die im einzelnen genannten Formgebungen für die Buchse unter den Umfang der Erfindung. Insbesondere kann die Buchse durch weitere Ausgestaltungen in ihrer Einbaulage gesichert werden, beispielsweise durch einen außen umlaufenden Absatz oder Kragen, der mit dem Gehäuse form- oder kraftschlüssig verbunden ist und ein Anheben der Buchse gegenüber dem Gehäuse verhindert, wenn der Klemmkörper bei gelösten Gewindebolzen nach oben geschoben wird.

Weitere Vorteile und Einzelheiten der Erfindung ergeben sich aus der nachfolgenden Beschreibung von Ausführungsbeispielen anhand der Zeichnungen.

Die Figuren zeigen im einzelnen:
Fig. 1: eine gemäß Linie A-A aus Fig. 2 geschnittene Darstellung einer erfindungsgemäßen Befestigungsanordnung mit Gehäuse und Zugsattelzapfen,
Fig. 2: eine Draufsicht von unten auf das unmontierte Gehäuse,
Fig. 3: eine Draufsicht auf einen als geschlitzte Hülse ausgeführten Sicherungskörper,
Fig. 4: eine gemäß Linie B-B geschnittene Darstellung der Hülse von Fig. 3 im unmontierten Zustand,
Fig. 5: die Hülse von Fig. 4 im montierten Zustand,
Fig. 6 bis 9: Teilansichten der Hülse von der Seite mit schematischen Darstellungen verschiedener Schlitzanordnungen.

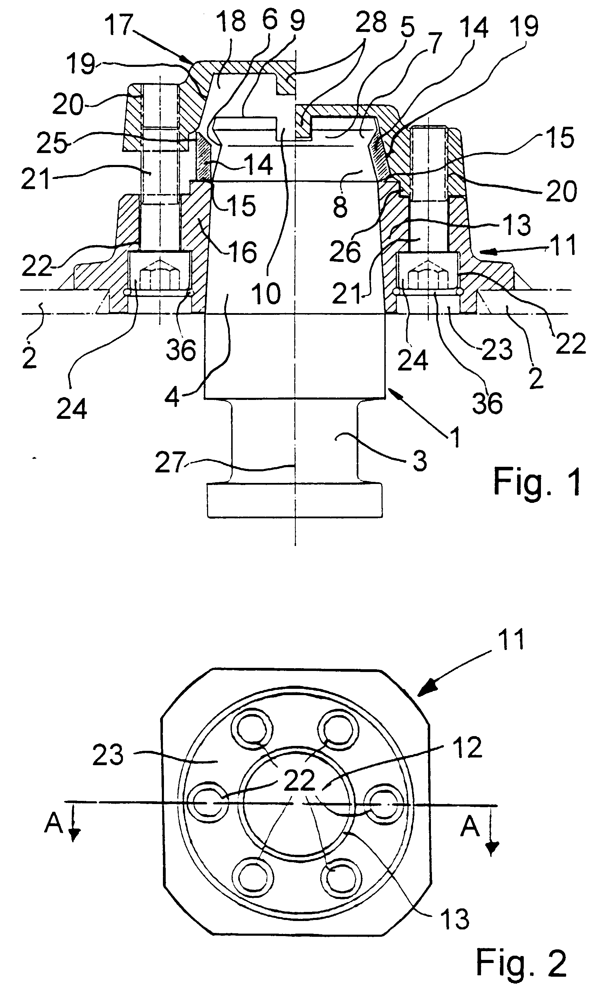

In Fig. 1 erkennt man einen Zugsattelzapfen 1, der zur Verbindung eines nur andeutungsweise dargestellten Sattelanhängers 2 mit einer nicht gezeigten Sattelkupplung einer Sattelzugmaschine dient. Für diesen Zweck besitzt der Zugsattelzapfen 1 einen Kupplungsabschnitt 3, der aus mehreren zylindrischen Abschnitten verschiedenen Durchmessers besteht, deren Maße und Anordnung genormt sind, beispielsweise in der Norm DIN 47080 oder der Norm ISO 337. Zum Ankuppeln wird der Kupplungsabschnitt 3 in die Sattelkupplung eingeführt, wo er verriegelt wird. Außerdem besitzt der Zugsattelzapfen 1 noch einen in der Mitte angeordneten, konischen Stützabschnitt 4 und einen Sicherungsabschnitt 5, der eine umlaufende Ringnut 6 in Form einer Einschnürung aufweist, die von zwei konischen Abschnitten 7, 8 gebildet wird. Auf einer Stirnseite 9 des Sicherungsabschnitts 5 ist eine nicht rotationssymmetrische Ausnehmung 10 für den Eingriff einer Verdrehsicherung angeordnet. Außer der Ausnehmung 10 ist der gesamte Zugsattelzapfen 1 rotationssymmetrisch ausgebildet.

Die in Fig. 1 dargestellte Befestigungsanordnung besitzt ein mit dem Sattelanhänger 2 verschweißtes Gehäuse 11, das in einer Draufsicht auch in Fig. 2 dargestellt ist. Das Gehäuse 11 besitzt eine durchgehende konische Aufnahmeöffnung 12 für die Aufnahme des Stützabschnitts 4 des Zugsattelzapfens 1, der zur Montage von unten in die Aufnahmeöffnung 12 eingeschoben wird, bis die Außenfläche des konischen Stützabschnitts 4 mit der komplementär geformten konischen Innenwand 13 der Aufnahmeöffnung 12 in festem Kontakt ist. Über die konische Innenwand 13 werden sowohl die axial gerichtete Gewichtskraft des Sattelanhängers 2 als auch die von der Sattelzugmaschine auf den Zugsattelzapfen 1 ausgeübten, im wesentlichen radial gerichteten Zugkräfte bzw. Drehmomente übertragen.

Der Sicherungsabschnitt 5 des Zugsattelzapfens 1 ragt oben aus der dem Sattelanhänger zugewandten Innenseite des Gehäuses 11 heraus. Er ist für die Sicherung des Zugsattelzapfens 1 gegen axiales Herausfallen aus der Aufnahmeöffnung 12 bestimmt. Durch die Ringnut 6 besitzt der Sicherungsabschnitt 5 eine seitliche Ausnehmung, die für den formschlüssigen Eingriff eines Sicherungskörpers 14 geeignet ist.

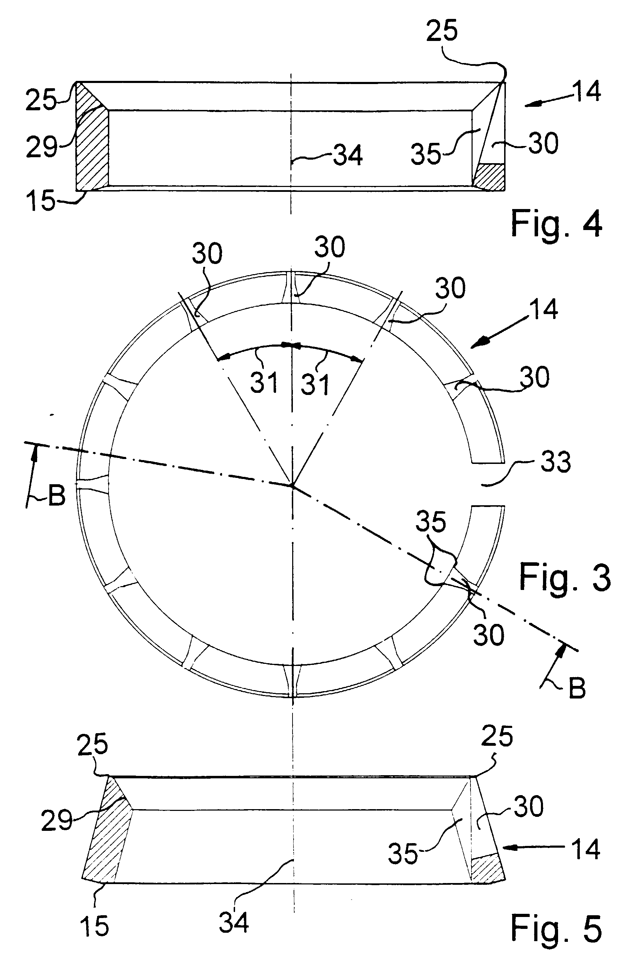

Der Sicherungskörper 14 ist in den Fig. 3 bis 9 im Detail dargestellt. Wie man am besten aus Fig. 3 erkennt, besteht der Sicherungskörper im wesentlichen aus einer geschlitzten Hülse 14, die den Sicherungsabschnitt 5 des Zugsattelzapfens 1 umschließt und mit ihrer Unterseite 15 auf der Oberseite 16 des Gehäuses 11 aufliegt.

Weiterhin ist auf der Oberseite 16 des Gehäuses 11 ein Klemmkörper 17 aufgeschraubt, der deckelförmig ausgestaltet ist und eine sich zur Stirnseite 9 des Zugsattelzapfens 1 hin verengende Klemmöffnung 18 mit einer konisch geformten Innenwand 19 aufweist. Die Klemmöffnung 18 umschließt den Sicherungsabschnitt 5 des Zugsattelzapfens 1, wobei die Hülse 14, wie im rechten Teil von Fig. 1 dargestellt, zwischen der Innenwand 19, der Klemmöffnung 18 und den konischen Abschnitten 7, 8 der Ringnut 6 eingeklemmt ist.

Zum Einklemmen besitzt der Klemmkörper 17 sechs seitlich neben dem Zugsattelzapfen 1 und um diesen herum angeordnete Gewindebohrungen 20, in die sechs Gewindebolzen 21 eingeschraubt sind. Das Gehäuse 11 besitzt sechs Stufenbohrungen 22, in die die Gewindebolzen 21 von der Unterseite 23 des Gehäuses 11 eingesteckt und in die Gewindebohrungen 20 eingeschraubt werden. Die Köpfe 24 der Gewindebolzen 21 sind in den Stufenbohrungen 22 versenkt angeordnet.

Die Situation vor dem Festziehen der Gewindebolzen 21 ist im linken Teil der Fig. 1 dargestellt. Zu diesem Zeitpunkt ist bereits der Zugsattelzapfen 1 von unten in die Aufnahmeöffnung 12 eingesteckt worden. Die Hülse 14 umgibt dabei den Sicherungsabschnitt 5, greift aber noch nicht in die Ringnut 6 ein. Der Klemmkörper 17 weist noch einen axialen Abstand zur Oberseite 16 des Gehäuses 11 auf. Die Oberseite 25 der Hülse 14 liegt mit einer Kante an der Innenwand 19 der Klemmöffnung 18 an.

Wenn jetzt die Gewindebolzen 21 festgezogen werden, wird der Klemmkörper 17 axial in Richtung Gehäuse 11 gezogen, wobei die Kante der Oberseite 25 der Hülse 14 durch die Schräge der konischen Innenwand 19 der Klemmöffnung 18 radial in Richtung auf den Sicherungsabschnitt 5 des Zugsattelzapfens 1 hin gedrückt wird, bis schließlich die Hülse 14, wie auf der rechten Seite von Fig. 1 gezeigt ist, zwischen den konischen Wänden 7, 8 der Ringnut 6 und der Innenwand 19 des Klemmkörpers 17 fest eingeklemmt ist. Der Zugsattelzapfen 1 kann sich jetzt auch in axialer Richtung nicht mehr bewegen und ist dadurch gegen Herausfallen aus der Ausnahmeöffnung 12 gesichert.

Bei der erfindungsgemäßen Anordnung ist insbesondere bemerkenswert, daß die Gewindebolzen 21 nur eine geringfügige axiale Kraft zum Festhalten des Klemmkörpers 17 am Gehäuse 11 aufbringen müssen. Gegebenenfalls vom Zugsattelzapfen 1 beim Fahrbetrieb ausgeübte radiale Kräfte, die unter Umständen von der Aufnahmeöffnung 12 des Gehäuses 11 nicht vollständig aufgenommen werden, können zwar über die Hülse 14 auf den Klemmkörper 17 übertragen werden, belasten jedoch die Gewindebolzen 21 nicht, weil der Klemmkörper 17 durch eine umlaufende Stufe 26 mit dem Gehäuse 11 in radialer Richtung formschlüssig verbunden ist. Die Schraubverbindung ist daher besonders sicher.

Um eine Rotation des Zugsattelzapfens 1 um seine Längsachse 27 infolge des Fahrbetriebs zu verhindern, ist in der Mitte des Klemmkörpers 17 ein axial in Richtung Zugsattelzapfen 1 vorstehender, nicht rotationssymmetrischer Vorsprung 28 angeordnet, der als Verdrehsicherung in die komplementär geformte Ausnehmung 10 auf der Stirnseite 9 des Sicherungsabschnitts 5 eingreift.

Wie man am besten in Fig. 4 oder 5 erkennt, ist die Innenwand 29 der Hülse 14 im Bereich der Oberseite 25 konisch erweitert, so daß im eingeklemmten Zustand (Fig. 5) das Profil der Hülse 14 an das Profil der Ringnut 6 angepaßt ist (Fig. 1, rechte Seite).

Wie man am besten in Fig. 3 erkennt, besitzt die Hülse 14 mehrere von der Oberseite 25 her eingebrachte, nicht durchgehende Schlitze 30, die in gleichen Winkelabständen 31 von 30° über den Umfang verteilt angeordnet sind. Die Schlitze 30 ermöglichen das Zusammendrücken der Oberseite 25 der Hülse 14 in die in Fig. 5 dargestellte konische Gesamtform, bei der ja der Durchmesser der Oberseite 25 verkleinert wird. Um auch eine Anpassung des Durchmessers der Unterseite 15 an die Maße des Zugsattelzapfens 1 bzw. des Klemmkörpers 17 zu ermöglichen, ist ein durchgehender Schlitz 33 vorgesehen, der die Hülse 14 auftrennt.

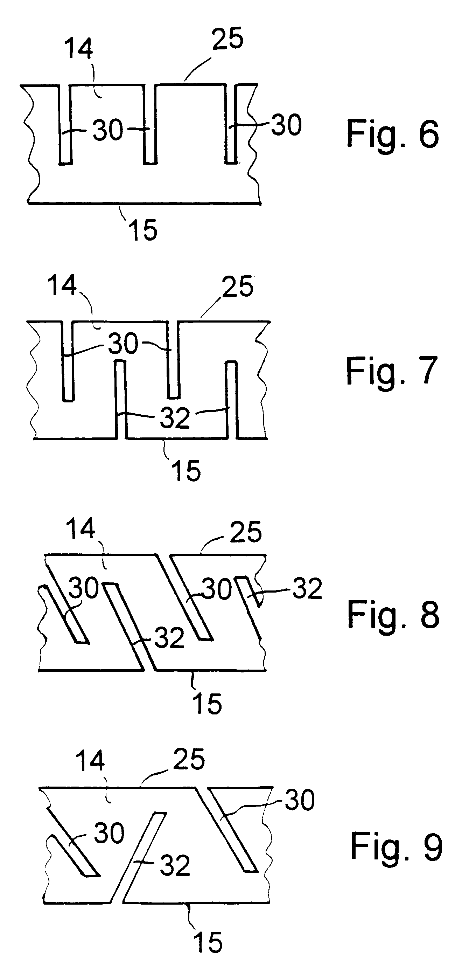

Eine weitere Möglichkeit zur Anpassung des Durchmessers der Unterseite 15 besteht darin, weitere Schlitze 32 vorzusehen, die von der Unterseite 15 her in die Hülse 14 eingebracht sind. Solche weiteren Schlitze 32 sind schematisch in den Fig. 7 bis 9 dargestellt.

Die Anpassung der Hülsenform im festgeklemmten Zustand an die Form der Ringnut 6 wird noch dadurch verbessert, daß die Schlitze 30 durch Abschrägungen 35 radial nach innen zu verbreitert sind.

In den Fig. 6 bis 9 sind vorteilhafte Anordnungen der Schlitze 30, 32 schematisch dargestellt. Fig. 6 betrifft die auch in den Fig. 3 bis 5 dargestellte Ausführungsform, bei der die Schlitze 30 von der Oberseite 25 der Hülse 14 ausgehend parallel zur Mittelachse 34 der Hülse 14 verlaufen. Bei der in Fig. 7 gezeigten Ausführungsform sind sowohl von der Oberseite 25 eingebrachte Schlitze 30 als auch von der Unterseite 15 eingebrachte Schlitze 32 parallel zur Mittelachse 34 der Hülse 14 angeordnet.

In den Fig. 8 und 9 verlaufen die Schlitze 30, 32 schräg zur Mittelachse 34 der Hülse 14 geneigt, wobei die von der Oberseite 25 eingebrachten Schlitze 30 und die von der Unterseite eingebrachten Schlitze 32 in Fig. 8 in dieselbe Richtung und in Fig. 9 abwechselnd in verschiedene Richtungen geneigt angeordnet sind.

Die erfindungsgemäße Hülse 14 besteht aus einem elastischen Metall, wobei durch die Schlitze 30, 32, 33 eine optimale Anpassung an die Einbaumaße der Ringnut 6 des Zugsattelzapfens 1 und der Klemmöffnung 18 des Klemmkörpers 17 erfolgen kann. Aufgrund der elastischen Eigenschaften der Hülse 14 ist auch die Demontage des Zugsattelzapfens 1 besonders einfach durchführbar.

Als Material für die Hülse 14 ist Stahl besonders gut geeignet, aber auch Kunststoff kommt im Hinblick auf eine kostengünstige Fertigung infrage. Um bei der Demontage des Zugsattelzapfens 1 eine elastische Rückverformung der Hülse 14 in ihre ursprüngliche Grundform zu unterstützen, wird empfohlen, die Hülse 14 mit einem elastomeren Material, insbesondere mit Gummi zu überziehen, das die Schlitze 30, 32, 33 ausfüllt.

Die Demontage kann besonders bequem von der Außenseite des Sattelanhängers 2 durchgeführt werden, indem die Gewindebolzen 21 gelöst werden. Die Gewindebolzen 21 sind dabei in der Stufenbohrung 22 durch einen Sprengring 36 axial festgehalten, so daß sie nicht nach unten herausfallen können. Beim Lösen der Gewindebolzen 21 drücken diese daher den Klemmkörper 17 axial nach oben, wobei die Innenwand 19 der Klemmöffnung 18 außer Eingriff mit der Hülse 14 kommt. Die Hülse 14 nimmt dann aufgrund ihrer Elastizität wieder die in Fig. 4 dargestellte ursprüngliche zylindrische Form ein. Diese Situation entspricht der Darstellung auf der linken Seite von Fig. 1. Der verschlissene Zugsattelzapfen 1 kann nunmehr einfach nach unten aus der Aufnahmeöffnung 12 herausgenommen und durch ein Ersatzteil ersetzt werden. Anschließend erfolgt die Befestigung des neuen Zugsattelzapfens 1 wieder durch einfaches Festziehen der Gewindebolzen 21.

## Patentansprüche

1. Zugsattelzapfen für Sattelanhänger, zur Verbindung des Sattelanhängers (2) mit der Sattelkupplung einer Sattelzugmaschine, mit einem Kupplungsabschnitt (3) zum Einrasten in die Sattelkupplung, mit einem Stützabschnitt (4) zum Einstecken in eine Abstützflächen (13) aufweisende Aufnahmeöffnung (12) des Sattelanhängers (2), und mit einem Sicherungsabschnitt (5) für die Sicherung des Zugsattelzapfens (1) gegen axiales Herausfallen aus der Aufnahmeöffnung (12), wobei der Sicherungsabschnitt (5) mindestens eine als umlaufende Ringnut (6) ausgebildete, seitliche Ausnehmung für den formschlüssigen Eingriff eines Sicherungskörpers (14) des Sattelanhängers (2) aufweist, **dadurch gekennzeichnet,** daß die Nutwände von zwei konischen Abschnitten (7, 8) gebildet werden, so daß die Ringnut (6) die Form einer Einschnürung hat.

2. Zugsattelzapfen nach Anspruch 1, **dadurch gekennzeichnet,** daß er im wesentlichen rotationssymmetrisch ausgebildet und daß der Stützabschnitt (4) konisch ist.

3. Zugsattelzapfen nach Anspruch 1 oder 2, **dadurch gekennzeichnet,** daß auf der Stirnseite (9) des Sicherungsabschnitts (5) eine nicht rotationssymmetrische Ausnehmung (10) für den Eingriff einer Verdrehsicherung (28) vorgesehen ist.

4. Befestigungsanordnung zum Befestigen von Zugsattelzapfen (1) an Sattelanhängern (2), mit einem am Sattelanhänger (2) befestigten, vorzugsweise verschweißten Gehäuse (11), das eine durchgehende, vorzugsweise konische Aufnahmeöffnung (12) für die Aufnahme eines Stützabschnitts (4) des Zugsattelzapfens (1) besitzt, **dadurch gekennzeichnet,** daß ein Sicherungsabschnitt (5) des Zugsattelzapfens (1) aus der dem Sattelanhänger (2) zugewandten Oberseite (16) des Gehäuses (11) herausragt und daß auf der Oberseite (16) des Gehäuses (11) ein Klemmkörper (17) aufgeschraubt ist, der mit einer sich zur Stirnseite (9) des Zugsattelzapfens (1) hin verengenden Klemmöffnung (18) den Sicherungsabschnitt (5) umschließt, wobei zwischen einer Innenwand (19) der Klemmöffnung (18) und einer seitlichen Ausnehmung (6) des Sicherungsabschnitts (5) zumindest ein Sicherungskörper (14) eingeklemmt ist.

5. Befestigungsanordnung nach Anspruch 4, **dadurch gekennzeichnet,** daß die Innenwand (19) der Klemmöffmung (18) konisch geformt ist.

6. Befestigungsanordnung nach Anspruch 4 oder 5, **dadurch gekennzeichnet,** daß der Klemmkörper (17) deckelförmig ausgestaltet ist.

7. Befestigungsanordnung nach Anspruch 6, **dadurch gekennzeichnet,** daß in der Mitte des Klemmkörpers (17) ein axial in Richtung Zugsattelzapfen (1) vorstehender, nicht rotationssymmetrischer Vorsprung (28) angeordnet ist, der als Verdrehsicherung in eine komplementär geformte Ausnehmung (10) auf der Stirnseite (9) des Sicherungsabschnitts (5) eingreift.

8. Befestigungsanordnung nach einem der Ansprüche 4 bis 7, **dadurch gekennzeichnet,** daß der Klemmkörper (17) mit seitlichen, im wesentlichen achsparallel zum Zugsattelzapfen (1) angeordneten Gewindebohrungen (20) versehen ist, in die von der Unterseite (23) des Gehäuses (11) her eingesteckte und durch Bohrungen (22) des Gehäuses (11) hindurchgehende Gewindebolzen (21) eingeschraubt sind.

9. Befestigungsanordnung nach Anspruch 8, **dadurch gekennzeichnet,** daß die Bohrungen des Gehäuses (11) als Stufenbohrungen (22) ausgeführt sind und daß die Köpfe (24) der Gewindebolzen (21) in den Stufenbohrungen (22) versenkt angeordnet sind.

10. Befestigungsanordnung nach einem der Ansprüche 5 bis 9, **dadurch gekennzeichnet,** daß der Sicherungskörper im wesentlichen als geschlitzte Hülse (14) ausgeführt ist, die den Sicherungsabschnitt (5) des Zugsattelzapfen (1) umschließt und mit ihrer Unterseite (15) auf der Oberseite (16) des Gehäuses (11) aufliegt, und daß die Oberseite (25) der Hülse (14) beim Festschrauben des Klemmkörpers (17) durch dessen konische Innenwand (19) in eine umlaufende Ringnut (6) des Sicherungsabschnitts (5) gedrückt wird, wobei die Hülse (14) eine konische Form einnimmt.

11. Befestigungsanordnung nach Anspruch 10, **dadurch gekennzeichnet,** daß die Innenwand (29) der Hülse (14) im Bereich der Oberseite (25) der Hülse (14) konisch erweitert ist, so daß das Profil der Hülse (14) an das Profil der Ringnut (6) angepaßt ist.

12. Befestigungsanordnung nach Anspruch 10 oder 11, **dadurch gekennzeichet,** daß die Hülse (14) mehrere von der Oberseite (25) her eingebrachte, nicht durchgehende Schlitze (30) aufweist, die im wesentlichen in gleichen Winkelabständen (31) über den Umfang verteilt angeordnet sind.

13. Befestigungsanordnung nach Anspruch 12, **dadurch gekennzeichnet,** daß weitere, nicht durchgehende Schlitze (32) von der Unterseite (15) her in die Hülse (14) eingebracht sind.

14. Befestigungsanordnung nach Anspruch 12 oder 13, **dadurch gekennzeichnet,** daß ein durchgehender Schlitz (33) vorgesehen ist, der die Hülse (14) auftrennt.

15. Befestigungsanordnung nach einem der Ansprüche 12 bis 14, **dadurch gekennzeichnet,** daß die Schlitze (30, 32) radial nach innen zu verbreitert sind.

16. Befestigungsanordnung nach einem der Ansprüche 12 bis 15, **dadurch gekennzeichnet,** daß die Schlitze (30, 32) von der Ober- (25) oder Unterseite (15) der Hülse (14) ausgehend parallel zur Mittelachse (34) der Hülse (14) verlaufen.

17. Befestigungsanordnung nach einem der Ansprüche 12 bis 15, **dadurch gekennzeichnet,** daß die Schlitze (30, 32) von der Ober-(25) oder Unterseite (15) der Hülse (14) ausgehend schräg zur Mittelachse (34) der Hülse (14) geneigt verlaufen.

18. Befestigungsanordnung nach Anspruch 17, **dadurch gekennzeichnet,** daß die Schlitze (30, 32) abwechselnd in verschiedene Richtungen geneigt angeordnet sind.

## Claims

1. A semitrailer coupling pin for semitrailers, for connecting the semitrailer (2) to the saddle coupling of a semitrailer towing vehicle, with a coupling section (3) for engagement in the saddle coupling, with a support section (4) for insertion into a receiving aperture (12) of the saddle trailer (2) comprising support surfaces (13), and with a securing section (5) to prevent the semitrailer coupling pin (1) from axially falling out of the receiving aperture (12), the securing section (5) comprising at least one lateral recess constructed as a circumferential annular groove (6) for the positive-locking engagement of a securing element (14) of the semitrailer (2), characterised in that the groove walls are formed by two conical sections (7, 8), so that the annular groove (6) has the form of a constriction.

2. A semitrailer coupling pin according to claim 1, characterised in that it is substantially rotationally symmetrical and the support section (4) is conical.

3. A semitrailer coupling pin according to claim 1 or 2, characterised in that a non-rotationally symmetrical recess (10) for the engagement of rotation lock (28) is provided on the end face (9) of the securing section (5).

4. A securing arrangement for securing semitrailer coupling pins (1) to semitrailers (2), with a housing (11) which is secured, preferably welded, to the semitrailer (2) and comprises a continuous, preferably conical receiving aperture (12) for receiving a support section (4) of the semitrailer coupling pin (1), characterised in that a securing section (5) of the semitrailer coupling pin (1) projects from the upper side (16) of the housing (11) facing the semitrailer (2), and screwed to the upper side (16) of the housing (11) is a clamping element (17), which encloses the securing section (5) with a clamping aperture (18) tapering towards the end face (9) of the semitrailer coupling pin (1), at least one securing element (14) being clamped between an inner wall (19) of the clamping aperture (18) and a lateral recess (6) of the securing section (5).

5. A securing arrangement according to claim 4, characterised in that the inner wall (19) of the clamping aperture (18) is conical.

6. A securing arrangement according to claim 4 or 5, characterised in that the clamping element (17) is cap-shaped.

7. A securing arrangement according to claim 6, characterised in that a non-rotationally symmetrical projection (28) axially projecting in the direction of the semitrailer coupling pin (1) is arranged in the centre of the clamping element (17) and engages as a rotation lock in a matching recess (10) on the end face (9) of the securing section (5).

8. A securing arrangement according to one of claims 4 to 7, characterised in that the clamping element (17) is provided with lateral threaded bores (20) arranged substantially axially parallel to the semitrailer coupling pin (1), into which bores are screwed the threaded bolts (21), which are inserted from the underside (23) of the housing (11) and pass through bores (22) of the housing (11).

9. A securing arrangement according to claim 8, characterised in that the bores of the housing (11) are constructed as stepped bores (22) and the heads (24) of the threaded bolts (21) are arranged in recessed fashion in the stepped bores (22).

10. A securing arrangement according to one of claims 5 to 9, characterised in that the securing element is essentially constructed as a slotted sleeve (14), which encloses the securing section (5) of the semitrailer coupling pin (1) and rests with its underside (15) on the upper side (16) of the housing (11), and when the clamping element (17) is secured by screwing, the upper side (25) of the sleeve (14) is forced by the conical inner wall (19) of the clamping element (17) into a circumferential annular groove (6) of the securing section (5), the sleeve (14) adopting a conical shape.

11. A securing arrangement according to claim 10, characterised in that the inner wall (29) of the sleeve (14) is conically enlarged in the region of the upper side (25) of the sleeve (14), so that the profile of the sleeve (14) is adapted to the profile of the annular groove (6).

12. A securing arrangement according to claim 10 or 11, characterised in that the sleeve (14) comprises a plurality of non-continuous slots (30) formed from the upper side (25), which are distributed over the circumference substantially at equal angular intervals (31).

13. A securing arrangement according to claim 12, characterised in that further, non-continuous slots (32) are formed in the sleeve (14) from the underside (15).

14. A securing arrangement according to claim 12 or 13, characterised in that a continuous slot (33) is provided, which separates the sleeve (14).

15. A securing arrangement according to one of claims 12 to 14, characterised in that the slots (30, 32) widen in a radially inward direction.

16. A securing arrangement according to one of claims 12 to 15, characterised in that the slots (30, 32) extend, starting from the upper side (25) or underside (15) of the sleeve (14), parallel to the centre axis (34) of the sleeve (14).

17. A securing arrangement according to one of claims 12 to 15, characterised in that the slots (30, 32) extend, starting from the upper side (25) or underside (15) of the sleeve (14), inclined relative to the centre axis (34) of the sleeve (14).

18. A securing arrangement according to claim 17, characterised in that the slots (30, 32) are arranged inclined in alternate directions.

## Revendications

1. Pivot d'accouplement de semi-remorque pour relier une semi-remorque (2) à un attelage de semi-remorque d'un tracteur comprenant :
- un élément d'accouplement (3) pour s'accrocher dans l'accouplement de remorque,
- un segment d'appui (4) pour s'engager dans un orifice de réception (12) d'une semi-remorque (2), ayant une surface d'appui (13), et,
- un segment de sécurité (5) pour protéger le pivot (1) contre toute sortie axiale de l'orifice de réception (12),
- le segment de sécurité (5) ayant au moins une cavité latérale réalisée comme rainure périphérique (6) pour la prise par une liaison de forme d'un organe de sécurité (14) de la semi-remorque (2),
caractérisé en ce que
les parois de la rainure sont formées par deux segments coniques (7, 8) pour que la rainure annulaire (6) présente la forme d'une gorge.

2. Pivot d'accouplement de semi-remorque selon la revendication 1,
caractérisé en ce qu'
il a une forme essentiellement symétrique en rotation et le segment d'appui (4) est de forme conique.

3. Pivot selon les revendications 1 ou 2,
caractérisé en ce que
la face frontale (9) du segment de sécurité (5) présente une cavité sans symétrie de rotation (10) pour recevoir un moyen de blocage en rotation (28).

4. Dispositif de fixation pour fixer un pivot d'accouplement (1) de semi-remorque (2), comprenant un boîtier (11) fixé et notamment soudé à une semi-remorque (2), qui comporte un orifice de réception (12) passant, de préférence conique, pour recevoir un segment d'appui (4) d'un pivot de semi-remorque (1),
caractérisé en ce que
- un segment de sécurité (5) du pivot d'attelage (1) dépasse du côté supérieur (16) du boîtier (11) tourné vers la semi-remorque (2),
- sur le côté supérieur (16) du boîtier (11) est vissé un organe de serrage (17) entourant le segment de sécurité (11) avec une ouverture de serrage (18) qui se rétrécit en direction de la face frontale (9) du pivot (1), et
- au moins un organe de sécurité (14) est pincé entre une paroi intérieure (19) de l'ouverture de serrage (18) et une cavité latérale (6) du segment de sécurité (5).

5. Dispositif de fixation selon la revendication 4,
caractérisé en ce que
la paroi intérieure (19) de l'ouverture de serrage (18) a une forme conique.

6. Dispositif de fixation selon les revendications 4 ou 5,
caractérisé en ce que
l'organe de serrage (17) est en forme de couvercle.

7. Dispositif de fixation selon la revendication 6,
caractérisé en ce qu'
au milieu de l'organe de serrage (17) il est prévu une partie en saillie (28) sans symétrie de rotation, dépassant axialement en direction du pivot (1), cette partie en saillie pénétrant comme moyen de blocage en rotation dans une cavité (10) de forme complémentaire de la face frontale (9) du segment de sécurité (5).

8. Dispositif de fixation selon l'une des revendications 4 à 7,
caractérisé en ce que
l'organe de serrage (17) est muni latéralement dans une direction essentiellement parallèle à l'axe du pivot (1), de taraudages (20) dans lesquels sont vissées des tiges filetées (21) par la face inférieure (23) du boîtier (11), à travers des perçages (22) du boîtier (11).

9. Dispositif de fixation selon la revendication 8,
caractérisé en ce que
les perçages du boîtier (11) sont des perçages étagés (22) et, les têtes (24) des vis (21) sont encastrées dans les perçages étagés (22).

10. Dispositif de fixation selon l'une des revendications 5 à 9,
caractérisé en ce que
l'organe de sécurité est essentiellement en forme de manchon fendu (14) qui entoure le segment de sécurité (5) du pivot (1) et s'appuie par son côté inférieur (15) sur le côté supérieur (16) du boîtier (11) et,
le côté supérieur (25) du manchon (14), lors du vissage serré de l'organe de serrage (17), est pressé par sa paroi intérieure conique (19) dans une rainure périphérique (6) du segment de sécurité (5), le manchon (14) prenant alors une forme conique.

11. Dispositif de fixation selon la revendication 10,
caractérisé en ce que
la paroi intérieure (29) du manchon (14) est élargie de manière conique au niveau du côté supérieur (25) du manchon (14) pour que le profil du manchon (14) soit adapté au profil de la rainure annulaire (6).

12. Dispositif de fixation selon la revendication 10 ou 11,
caractérisé en ce que
le manchon (14) comporte plusieurs fentes (30) non continues, réalisées à partir du côté supérieur (25), ces fentes étant réparties essentiellement de manière équiangulaire (31) à la périphérie.

13. Dispositif de fixation selon la revendication 12,
caractérisé en ce que
d'autres fentes (32) non traversantes sont réalisées dans le manchon (14) à partir du côté inférieur (15).

14. Dispositif de fixation selon la revendication 12 ou 13,
caractérisé par
une fente (33) traversante qui coupe le manchon (14).

15. Dispositif de fixation selon l'une des revendications 12 à 14,
caractérisé en ce que
les fentes (30, 32) s'élargissent radialement vers l'intérieur.

16. Dispositif de fixation selon l'une quelconque des revendications 12 à 15,
caractérisé en ce que
la fente (30, 32) part du côté supérieur (25) ou du côté inférieur (15) du manchon (14), de manière parallèle à l'axe médian (34) du manchon (14).

17. Dispositif de fixation selon l'une quelconque des revendications 12 à 15,
caractérisé en ce que
les fentes (30, 32) sont inclinées à partir du côté supérieur (25) ou du côté inférieur (15) du manchon (14), en biais vers l'axe (34) du manchon (14).

18. Dispositif de fixation selon la revendication 17,
caractérisé en ce que
les fentes (30, 32) sont inclinées en alternance dans différentes directions.
